# EUROPÄISCHE PATENTSCHRIFT

(11) **EP 3 985 258 B1**
(45) Veröffentlichungstag und Bekanntmachung des Hinweises auf die Patenterteilung: **21.02.2024**
(21) Anmeldenummer: 21202419.4
(22) Anmeldetag: 13.10.2021
(51) Int. Cl.: F04D 7/04, F04D 29/02, F04D 29/12, F04D 29/42

(54) **KREISELPUMPE MIT EINEM PUMPENGEHÄUSE UND EINEM DRUCKDECKEL**
CENTRIFUGAL PUMP WITH A PUMP HOUSING AND A PRESSURE COVER
POMPE CENTRIFUGE DOTÉE D'UN CARTER DE POMPE ET D'UN COUVERCLE À PRESSION

(30) Priorität: 16.10.2020 DE 102020006364
(43) Veröffentlichungstag der Anmeldung: 20.04.2022
(73) Patentinhaber: KSB SE & Co. KGaA, 67227 Frankenthal (DE)
(72) Erfinder: Pittroff, Markus, c/o KSB SE & Co. KGaA, 67227 Frankenthal (DE); Schmitt, Michael, c/o KSB SE & Co. KGaA, 67227 Frankenthal (DE)

(56) Entgegenhaltungen:
- CN-A- 110 230 602
- CN-U- 210 290 245
- DE-A1- 3 826 472
- DE-A1-102018 208 574
- US-A1- 2007 071 907

## Beschreibung

Die Erfindung betrifft eine Kreiselpumpe mit einem Pumpengehäuse und einem Druckdeckel.

Pumpengehäuse dienen dem flüssigkeitsdichten und druckfesten Abschluss des Pumpeninnenraumes nach außen. Bei Kreiselpumpen umschließen sie den Pumpenläufer, der dem Fördermedium durch mindestens ein Laufrad auf der rotierenden Welle Energie zuführt.

Erfordert die Bauart der Pumpe, dass die Antriebswelle durch das Pumpengehäuse geführt wird, so verhindern Wellendichtungen das Austreten von größeren Flüssigkeitsströmen aus dem oder das Eindringen von Luft in das Pumpengehäuse. Die Antriebswelle wird druckseitig durch den Druckdeckel und saugseitig durch den Einlaufring geführt und jeweils mittels einer Wellendichtung abgedichtet.

Durch den Kontakt mit einem strömenden, feststoffhaltigen Medium kann es zu einem Abtrag an Material in der Kreiselpumpe, insbesondere am Pumpengehäuse und am Druckdeckel, kommen. Dieser Abtrag wird auch als Abrasion bezeichnet. Abrasionserscheinungen können die Funktionsfähigkeit der Kreiselpumpe stark beeinträchtigen. Insbesondere wenn sich zusätzliche Partikel in der Strömung befinden, beispielsweise Feststoffpartikel wie Sand, kann dies zu einem starken Abtrag an Material führen. Verschleißfeste Werkstoffe sind dann zwingend notwendig, um die Abrasion zu minimieren.

Es ist bekannt, bei Kreiselpumpen zur Förderung hochabrasiver Medien die strömungsführenden Teile wie Laufrad und Pumpengehäuse etc. aus korrosionsbeständigen nichtmetallischen Werkstoffen herzustellen oder diese Teile mit einem Überzug aus Gummi, Kunststoff oder Emaille zu versehen. Herkömmliche Werkstoffe, die dabei eingesetzt werden, sind begrenzt in Bezug auf ihre Festigkeit bzw. ihre Korrosionsbeständigkeit. Auch weisen herkömmliche Werkstoffe nur eine begrenzte Verschleißhinderung beim Kontakt mit dem strömenden Medium auf.

Beim Fördern feststoffhaltiger Medien muss überdies mit einem durch die abrasive Wirkung der Schmutzteile verursachten Abtrag des Druckdeckels sowie der die Wellendichtung aufnehmenden Flächen des Druckdeckels gerechnet werden.

Die DE 42 28 042 A1 gibt einen Druckdeckel zum Verschließen eines Pumpeninnenraums an. Die Durchführung der Laufradwelle ist mit einer Gleitringdichtung abgedichtet. Die Sitze der Gleitringdichtung sind mit unterschiedlichen Durchmessern ausgeführt.

Die DE 10 2014 214 929 A1 beschreibt eine Wellendichtung einer Kreiselpumpe, bestehend aus zwei Gleitring-Gegenring-Paarungen, die in einer tiefgezogenen Aussparung eines Druckdeckels (Dichtungsdeckel) zum Abdichten eines Pumpeninnenraumes angeordnet sind.

Die CN 210 290 245 U offenbart eine Kreiselpumpe mit einer Reibungsdichtungsschicht, wobei die entsprechende Schicht auf der Innenwand des Pumpengehäuses angeordnet ist.

Die US 2007/071907 A1 zeigt die Hartbeschichtung von Eisenmetallsubstraten unter

Verwendung eines Laserstrahls mit Diamantpartikeln in einer Metallmatrix. Die DE 38 26 472 A1 zeigt eine weitere Kreiselpumpe des Stands der Technik.

Aufgabe der Erfindung ist es, eine Kreiselpumpe mit einem verschleißfesten Druckdeckel anzugeben. Des Weiteren soll eine Beschädigung des Sitzes der Wellendichtung verhindert werden. Die Kreiselpumpe soll sich durch eine hohe Zuverlässigkeit und eine lange Lebensdauer auszeichnen. Sie soll zudem eine einfache Montage gewährleisten. Weiterhin soll die Kreiselpumpe durch möglichst geringe Herstellungskosten überzeugen.

Diese Aufgabe wird erfindungsgemäß durch eine Kreiselpumpe mit einem Pumpengehäuse und einem Druckdeckel mit den Merkmalen des Anspruchs 1 gelöst. Bevorzugte Varianten sind den Unteransprüchen zu entnehmen.

Erfindungsgemäß weist eine Oberfläche eines Druckdeckels zumindest teilweise eine Kohlenstoffschicht auf. Der Druckdeckel verschließt den Pumpeninnenraum des Pumpengehäuses einer Kreiselpumpe. Gleichzeitig wird durch den Druckdeckel die Laufradwelle in den Pumpeninnenraum geführt, die gegen Leckage mit einer Wellenabdichtung versehen ist. Die erfindungsgemäße Beschichtung schützt das Bauteil Druckdeckel, insbesondere beim Fördern feststoffbelasteter Medien, vor einer abrasiven Einwirkung des Fördermediums und realisiert auf vorteilhafte Weise eine lange Standzeit der Kreiselpumpe.

Idealerweise weist die mit einem Fördermedium in Kontakt stehende Fläche des Druckdeckels eine Kohlenstoffschicht auf. Insbesondere diese Fläche des Druckdeckels ist durch die abrasive Einwirkung feststoffhaltiger Medien besonders beansprucht und durch die erfindungsgemäße Kohlenstoffschicht idealerweise geschützt.

Erfindungsgemäß ist an dem Druckdeckel ein Dichtelement angeordnet, das Teil des Konzepts der Wellenabdichtung bei der Durchführung am Druckdeckel ist. Der Druckdeckel weist somit eine Kontaktfläche auf, an der ein solches Dichtelement anliegt. Erfindungsgemäß ist diese Kontaktfläche des Druckdeckels zum Dichtelement mit einer Kohlenstoffschicht versehen.

Ein solches Dichtelement kann gemäß der Erfindung ein statisches Dichtelement sein, das somit keine rotierende Bewegung, die beispielsweise von der Laufradwelle ausgeht, vollzieht. Vorzugsweise ist ein solches statisches Dichtelement als O-Ring ausgeführt, der aus einem elastomeren Kunststoff gefertigt sein kann. Der O-Ring ist erfindungsgemäß unmittelbar am Druckdeckel angeordnet.

Idealerweise dichtet der O-Ring die Einpassung der Wellenabdichtung, die vorzugsweise als Gleitringdichtungsanordnung ausgeführt ist, ab. Gleitringdichtungsanordnungen sind dynamische Dichtungen. Sie dichten also eine rotierende Welle gegenüber einer Wand ab, z. B. eines Pumpengehäuses oder Druckdeckels. Hauptkomponenten sind zwei aufeinander gleitende Bauteile, der befederte Gleitring und ein Gegenring. Einer der beiden Ringe, vorzugsweise der Gegenring, sitzt starr im stationären Pumpengehäuse oder im erfindungsgemäßen Druckdeckel. Der andere Ring ist auf dem metallischen Träger montiert. Die Flächen zwischen diesen beiden Teilen sind zumeist plan und bestehen in der Regel aus Kohlenstoff-Graphitwerkstoffen, Metall, Keramik, Kunststoff oder kunstharz-gebundenem Kohlenstoff.

Der O-Ring dient sowohl der Fixierung des Gegenrings als auch als statisches Dichtelement der Reduktion eines Leckagestroms des Fördermediums und schützt somit sowohl das Bedienpersonal als auch die Umwelt vor einem übermäßigen Austritt an Fördermedium. Das Dichtelement O-Ring wirkt mit der Gleitringdichtungsanordnung zusammen, um die Wellendurchführung abzudichten.

Bevorzugt weist der Druckdeckel eine Aussparung zur Aufnahme des Dichtelements auf. Diese Aussparung kann vorzugsweise als einseitig offene Nut, die durch eine Schulter der Wellendurchführung des Druckdeckels gebildet wird, ausgeführt sein. Die Schulter der Wellendurchführung ist besonders stabil ausgebildet und kann auf vorteilhafte Weise das Dichtelement stützen.

Die einseitige Nut kann mittels Drehvorrichtung in den Druckdeckel eingebracht werden. In einer vorteilhaften Variante ist die einseitig offene Nut mit einem Radius versehen, der den Übergang von einer radialen Fläche zu einer axialen Fläche der Nut beschreibt. In einer alternativen Variante der Erfindung kann die Nut auch einen 90 ° Winkel zwischen der radialen und der axialen Fläche aufweisen.

Die Kontaktflächen des Druckdeckels mit dem Dichtelement weisen eine Kohlenstoffschicht auf. Das sind insbesondere eine axiale Fläche und eine radiale Fläche der einseitig offenen Nut, die mit einer Kohlenstoffschicht beschichtet sind. Gerade diese Kontaktflächen sind durch die Gleitringdichtungsanordnung dynamisch belastet und neigen zum Verschleißen. Die erfindungsgemäße Kohlenstoffschicht der belasteten Kontaktflächen bildet einen wirksamen Schutz vor frühzeitigem Verschleiß und bildet vorteilhafterweise eine Grundlage für eine lange Betriebszeit der Kreiselpumpe.

Erfindungsgemäß wirkt das Dichtelement mit der Gleitringdichtungsanordnung der Welle zusammen. Dazu ist der feststehende Gegenring der Gleitringdichtungsanordnung direkt an dem O-Ring angeordnet.

Von besonderem Vorteil ist die Kohlenstoffschicht hinsichtlich eines Berührens oder Anlaufens des Laufrads an den spaltdichtenden Flächen des Druckdeckels. Aufgrund der besonders glatten Oberfläche der Kohlenstoffschicht sowie deren außergewöhnlicher Härte verhält sich der Druckdeckel weniger empfindlich gegenüber einer anstreifenden Einwirkung eines Laufrads.

Unter den Kohlenstoffschichten werden Schichten verstanden, in denen Kohlenstoff der überwiegende Bestandteil ist. Die Kohlenstoffschicht kann beispielsweise mit einer PVD- (engl. Physical Vapor Deposition), einer physikalischen Gasphasenabscheidung (etwa durch Verdampfen oder Sputtern) oder einem CVD- (engl. Chemical Vapor Deposition; Chemische Gasphasenabscheidung) Verfahren aufgebracht werden.

Vorzugsweise handelt es sich um eine amorphe Kohlenstoffschicht, insbesondere eine tetraedrische wasserstofffreie amorphe Kohlenstoffschicht, die auch als ta-C Schicht bezeichnet wird. Die dem Kristallgitter von Graphit zugehörigen Atombindungen (insgesamt jeweils 3) kennzeichnet man mit der Bezeichnung "sp2". Dabei liegt eine sp2-Hybridisierung vor.

Bei einer Diamantschicht bildet jedes Kohlenstoffatom mit vier benachbarten Atomen eine tetraederförmige Anordnung. Bei dieser räumlichen Anordnung sind alle Atomabstände gleich gering. Es wirken daher sehr hohe Bindungskräfte zwischen den Atomen, und dies in allen Raumrichtungen. Daraus resultieren die hohe Festigkeit und die extreme Härte des Diamanten. Die dem Kristallgitter von Diamanten zugehörigen Atombindungen, insgesamt jeweils vier, kennzeichnet man mit der Bezeichnung "sp3". Somit liegt eine sp3-Hybridisierung vor.

Bei einer besonders günstigen Variante der Erfindung besteht die Kohlenstoffschicht aus einer Mischung von sp3- und sp2-hybridisiertem Kohlenstoff. Diese Schicht ist durch eine amorphe Struktur gekennzeichnet. In dieses Kohlenstoffnetzwerk können auch Fremdatome wie Wasserstoff, Silizium, Wolfram oder Fluor eingebaut sein.

Die erfindungsgemäße Anordnung einer Kohlenstoffschicht auf einem Druckdeckel führt zu einer erheblichen Reduzierung des abrasiven Abtrags, der beispielsweise durch das Fördern von feststoffhaltigen Medien hervorgerufen wird.

Durch die Anordnung einer Kohlenstoffschicht auf einem Druckdeckel, insbesondere auf den medienberührenden Flächen des Druckdeckels, wird eine extrem glatte Oberfläche mit Antihafteigenschaften geschaffen, ohne dass eine aufwendige mechanische Nachbearbeitung des Druckdeckels erforderlich ist. Des Weiteren können mehrere Druckdeckel in einem Beschichtungsreaktor, der vorzugsweise als Vakuumkammer ausgeführt ist, eingebracht werden, wo bei mäßiger thermischer Belastung, die ta-C Beschichtung aufgebracht wird. Somit zeichnet sich die erfindungsgemäße Kreiselpumpe mit einem ta-C beschichteten Druckdeckel durch verhältnismäßig geringe Herstellungskosten aus.

Bei einer besonders günstigen Variante der Erfindung wird die Kohlenstoffschicht als Beschichtung auf einen Druckdeckel aufgebracht. Die Dicke der Schicht beträgt vorteilhafterweise mehr als 0,5 µm, vorzugsweise mehr als 1,0 µm, insbesondere mehr als 1,5 µm. Weiterhin erweist es sich als günstig, wenn die Kohlenstoffschicht weniger als 18 µm, vorzugsweise weniger als 16 µm, insbesondere weniger als 14 µm, beträgt.

Idealerweise weist die Beschichtung aus Kohlenstoff eine äußerst glatte axiale Oberfläche mit Antihafteigenschaften auf, bei der der Mittenrauheitswert Rₐ der Kohlenstoffschicht weniger als 0,7 µm, vorzugsweise weniger als 0,5 µm, insbesondere weniger als 0,3 µm, beträgt.

Die ta-C Beschichtung weist einen sehr geringen Reibbeiwert bei gleichzeitig sehr guter chemischer Beständigkeit auf. Die Härte der Beschichtung kommt der Härte von Diamanten sehr nahe, wobei die Härte mehr als 20 GPa, vorzugsweise mehr als 30 GPa, insbesondere mehr als 40 GPa, und/oder weniger als 120 GPa, vorzugsweise weniger als 110 GPa, insbesondere weniger als 100 GPa, beträgt.

Mit durchschnittlich 40 bis 75 GPa sind ta-C Beschichtungen härter als a-C:H Schichten. Zudem enthält ta-C keinen Wasserstoff. Deshalb ist davon auszugehen, dass ta-C im Kontakt mit Wasser (bei Temperaturen oberhalb 80 °C) beständiger ist als a-C:H. Im Kontakt mit anderen - insbesondere polaren - Flüssigkeiten, die Moleküle enthalten, in denen Wasserstoff gebunden ist, könnte ta-C ebenfalls besser beständig sein als a-C:H.

Vorzugsweise wird die Kohlenstoffschicht nicht unmittelbar auf den Druckdeckel aufgebracht, sondern es wird zunächst eine Haftvermittlerschicht vorgesehen. Diese besteht bevorzugt aus einem Werkstoff, der sowohl gut an Stahl haftet als auch eine Kohlenstoffdiffusion verhindert, z. B. durch die Bildung stabiler Carbide. Als Haftvermittlungsschichten, die diese Anforderungen erfüllen, kommen passenderweise dünne Schichten aus Chrom, Titan oder Silizium zum Einsatz. Insbesondere haben sich Chrom- und Wolframcarbid als Haftvermittler bewährt.

Bei einer vorteilhaften Variante der Erfindung weist die Beschichtung eine Haftvermittler-schicht auf, die vorzugsweise einen Chromwerkstoff beinhaltet. Vorzugsweise besteht die Haftvermittlerschicht zu mehr als 30 Gew.-%, vorzugsweise mehr als 60 Gew.-%, insbesondere mehr als 90 Gew.-%, aus Chrom.

Bei der erfindungsgemäßen ta-C Beschichtung handelt es sich um eine einfache, schnell realisierbare und wirtschaftliche Beschichtung für Druckdeckel und deren Kontaktflächen zu Wellenabdichtungen in Kreiselpumpen. Die erfindungsgemäße Beschichtung weist neben einer sehr großen Härte auch hervorragende Gleiteigenschaften und eine gute chemische Beständigkeit auf.

Zudem ermöglicht die Erfindung auch eine Beschichtung von Druckdeckelgeometrien mit speziellen Abmessungen. Darüber hinaus lassen sich Druckdeckelgeometrien realisieren, die zuvor aus keramischen Werkstoffen fertigungsbedingt schwer realisierbar waren. Insbesondere zeichnen sich die meisten metallischen Werkstoffe durch eine höhere Duktilität im direkten Vergleich zu einem keramischen Werkstoff aus.

Der Vorteil der höheren Härte durch die ta-C Beschichtung liegt darin begründet, dass Feststoffpartikel, die oft in den feststoffhaltigen Medien enthalten sind, nun stark vermindert abrasiv auf den Druckdeckel wirken können. Durch die Strömung wirken diese Feststoffteilchen normalerweise wie ein Schleifmittel. Druckdeckel mit Sitzflächen für statische Dichtungen, die mit ta-C beschichtet sind, verfügen über eine äußerst harte Schutzschicht gegen Abrasion, wodurch deren Einsatzzeit in der Förderung feststoffhaltiger Medien deutlich erhöht ist.

Vorzugsweise werden zur Beschichtung PECVD/PACVD-Verfahren eingesetzt. Dabei erfolgt eine Plasmaanregung der Gasphase durch die Einkopplung von gepulster Gleichspannung ("pulsed DC"), mittelfrequenter (KHz-Bereich) oder hochfrequenter (MHz-Bereich) Leistung. Aus Gründen einer maximierten Prozessvariabilität bei unterschiedlichen Werkstückgeometrien und Beladungsdichten hat sich zudem die Einkopplung von gepulster Gleichspannung bewährt.

Idealerweise werden zur Beschichtung PVD Verfahren eingesetzt. Diese Verfahren sind besonders einfach und weisen eine niedrige Prozesstemperatur auf. Diese Technologie führt zu Schichten, in die je nach Bedarf auch Fremdatome eingebaut sein können. Die Prozessführung erfolgt vorzugsweise so, dass Gefüge- und Dimensionsänderungen der zu beschichtenden Werkstoffe (metallisch, Grauguss, etc.) ausgeschlossen sind.

Gegenüber einer CVD-Diamantschicht hat die ta-C Beschichtung den Vorteil, dass die Beschichtungstemperatur für CVD-Diamantschichten 600 bis 1000 °C beträgt und für amorphe Kohlenstoffschichten wie ta-C deutlich unter 500 °C liegt. Dies ist insbesondere für das Beschichten metallischer Werkstoffe von hoher technischer Relevanz. Die Herstellung von PVD-Diamantschichten ist nicht möglich.

Weitere Merkmale und Vorteile der Erfindung ergeben sich aus der Beschreibung von Ausführungsbeispielen anhand der Zeichnungen und aus den Zeichnungen selbst.

Dabei zeigt:
- Fig. 1: Schnittdarstellung einer Kreiselpumpe,
- Fig. 2: Schnittdarstellung eines Druckdeckels,
- Fig. 3: eine vergrößerte Schnittdarstellung eines Druckdeckels mit einer Anordnung zur Wellenabdichtung.

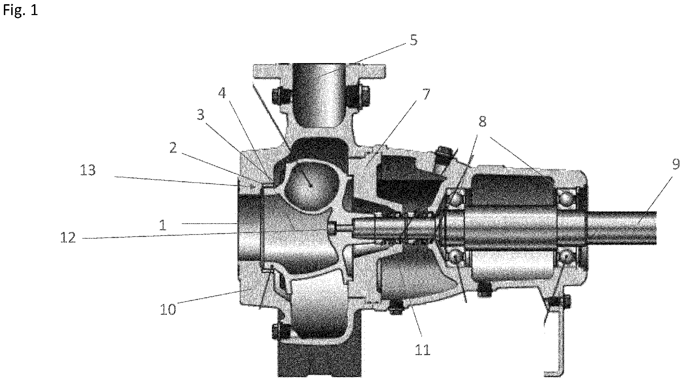

Fig. 1 zeigt eine Schnittdarstellung einer Kreiselpumpe zur Förderung feststoffhaltiger Medien mit einer Anordnung zur Reduzierung einer Rückströmung 13. Die Anordnung 13 umfasst ein feststehendes, nicht rotierendes Element 2, das in diesem Ausführungsbeispiel mit einem geschlossenen Einschaufelrad 4 zusammenwirkt. Das Element 2 ist in diesem Ausführungsbeispiel als Spaltring ausgebildet. Über den Saugmund 1 strömt das feststoffhaltige Medium in die Pumpe ein, wird von dem geschlossenen Einschaufelrad 4, welches drehfest durch die Befestigung 12 mit der Welle 9 verbunden ist, mit Bewegungsenergie beaufschlagt und verlässt das Pumpengehäuse 10 über den Druckstutzen 5. Die Welle 9 ist durch die Kugellager 8 drehbar gelagert. Der Druckdeckel 7 verschließt das Pumpengehäuse 10 in Richtung Antrieb. Gleichzeitig ist durch den Druckdeckel 7 eine Durchführung der Welle 9 implementiert, die mit einer Wellenabdichtung 11 den Fluidraum der Kreiselpumpe abdichtet. Die Wellenabdichtung 11 ist in diesem Ausführungsbeispiel als Gleitringdichtungsanordnung ausgebildet.

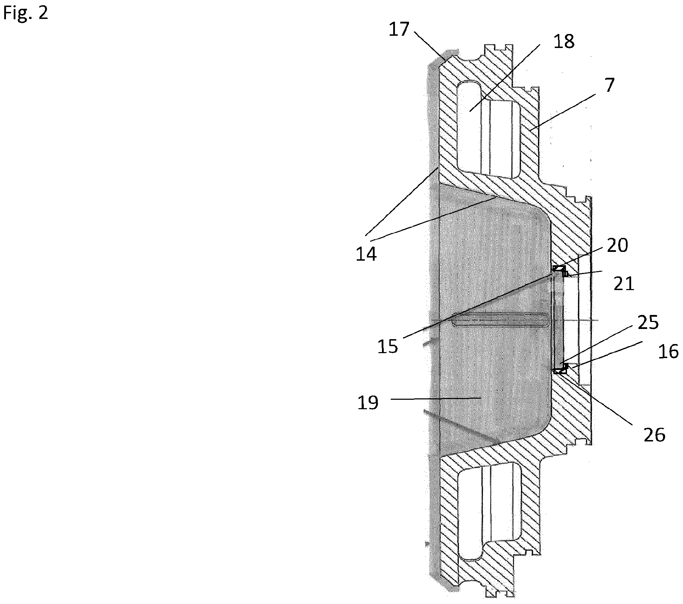

Fig. 2 zeigt eine Schnittdarstellung eines Druckdeckels 7. Der Druckdeckel 7 ist ein nahezu zylinderförmiges Bauteil mit Dichtflächen zur Einpassung in das Pumpengehäuse 10. Die Hohlräume 18 dienen zur Reduktion des Gewichtes des Druckdeckels 7. Im Zentrum des Druckdeckels 7 ist ein kegelstumpfförmiger Hohlraum 19 ausgespart, um die Wellenabdichtung 11 der Welle 9 sowie die Durchführung der Welle 9 selbst anzuordnen. Erfindungsgemäß weist die mit dem Fördermedium in Kontakt stehende Oberfläche 14 des Druckdeckels 7 eine Kohlenstoffschicht auf. Idealerweise ist diese Kohlenstoffschicht als tetraedrische wasserstofffreie amorphe Kohlenstoffschicht ausgebildet. Diese Kohlenstoffschicht ist besonders hart und somit gegenüber der Einwirkung abrasiv wirkender Feststoffe im Fördermedium geschützt. Die Härte der Beschichtung aus ta-C kommt der Härte von Diamanten sehr nahe, wobei die Härte mehr als 20 GPa, vorzugsweise mehr als 30 GPa, insbesondere mehr als 40 GPa, und/oder weniger als 120 GPa, vorzugsweise weniger als 110 GPa, insbesondere weniger als 100 GPa, beträgt. Dabei beträgt die Dicke der Kohlenstoffschicht vorteilhafterweise mehr als 0,5 µm, vorzugsweise mehr als 1,0 µm, insbesondere mehr als 1,5 µm. Weiterhin erweist es sich als günstig, wenn die Dicke der Kohlenstoffschicht weniger als 18 µm, vorzugsweise weniger als 16 µm, insbesondere weniger als 14 µm, beträgt. Vorzugsweise ist der Druckdeckel 7 aus einem Gusswerkstoff oder einem nichtrostenden Stahl-Werkstoff gefertigt.

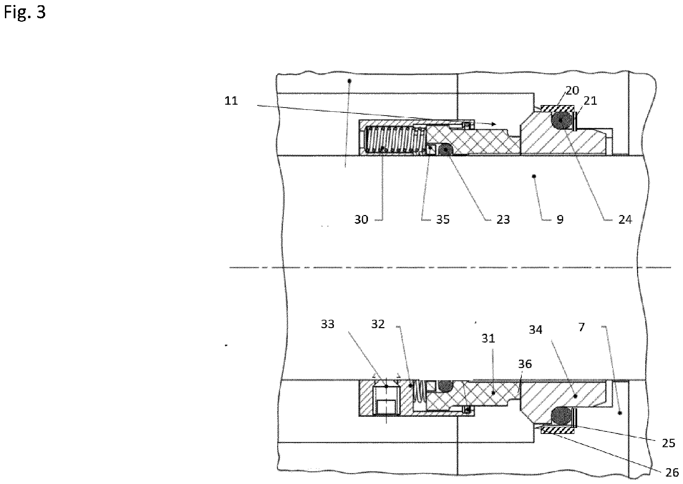

An den kegelstumpfförmigen Hohlraum 19 grenzt eine Aussparung 15 an, die als einseitig offene Nut 25 ausgeführt ist und mit einer 10° bis 30° Fase 26 aus dem kegelstumpfförmigen Hohlraum 19 übergeht. Die einseitig offene Nut 25, gebildet von der Schulter 16 des Druckdeckels 7, ist zur Aufnahme eines Dichtelements 24, wie in Figur 3 gezeigt, vorgesehen. Um der Belastung der Wellenabdichtung 11 der Welle 9 entgegen zu wirken, weisen insbesondere die radiale Fläche 20 und die axiale Fläche 21, die die Kontaktflächen des Dichtelements 24 bilden, eine Kohlenstoffschicht auf. Auf diese vorteilhafte Weise werden die durch die Wellenabdichtung 11 belasteten radiale Fläche 20 und axiale Fläche 21 besonders geschützt und erweisen sich hierdurch als äußerst langlebig.

Fig. 3 zeigt eine vergrößerte Darstellung der Wellenabdichtung 11 der Welle 9. Das Vorspannelement 30 übt eine Anpresskraft auf den axial verschieblichen Gleitring 31 aus. Auf der Welle 9 ist ein als Gleitringträger ausgebildetes Element 32 angeordnet, das über einen Gewindestift 33 fixiert ist. Die Darstellung gemäß Fig. 3 zeigt zwei Dichtelemente 23 und 24 zur Reduktion eines Leckagestroms des Fördermediums. In diesem Ausführungsbeispiel sind die Dichtelemente als O-Ringe ausgeführt. Um die Belastungen der Wellenabdichtung 11 sowie der Einwirkung feststoffhaltiger Fluide langfristig bewerkstelligen zu können, sind die Sitzflächen des Dichtelements 24 mit ta-C beschichtet. Insbesondere eine radiale Fläche 20 und eine axiale Fläche 21 der einseitig offenen Nut 25, die das Dichtelement 24 aufnimmt, sind mit ta-C beschichtet und somit gegenüber dynamischen Belastungen sowie der Einwirkung abrasiver Fluide besonders geschützt.

Die Wellenabdichtung 11 der Welle 9 umfasst einen im Druckdeckel 7 feststehenden Gegenring 34 und einen axial beweglichen Gleitring 31. Der axial bewegliche Gleitring 31 wird mittels eines Vorspannelements 30, hier einer Druckfeder, und über eine Stützscheibe 35 in Richtung des Gegenrings 34 gedrückt, sodass einander gegenüberliegende Flächen des Gegenrings 34 und des Gleitrings 31 abdichtend zusammenwirken und zwischen sich einen Dichtspalt 36 ausbilden.

## Patentansprüche

1. Kreiselpumpe mit einem Pumpengehäuse (10) und einem Druckdeckel (7), wobei eine Oberfläche des Druckdeckels (7) zumindest teilweise eine Kohlenstoffschicht aufweist und an dem Druckdeckel (7) ein Dichtelement (24) angeordnet ist, wobei der Druckdeckel (7) mindestens eine Kontaktfläche zu dem Dichtelement (24) aufweist, die mit einer Kohlenstoffschicht versehen ist,
wobei das Dichtelement (24) mit einer Anordnung zur Wellenabdichtung (11) zusammenwirkt.

2. Kreiselpumpe nach Anspruch 1, **dadurch gekennzeichnet, dass** die mit einem Fördermedium in Kontakt stehende Fläche (14) des Druckdeckels (7) eine Kohlenstoffschicht aufweist.

3. Kreiselpumpe nach Anspruch 1 oder 2, **dadurch gekennzeichnet, dass** der Druckdeckel (7) eine Aussparung (15) zur Aufnahme des Dichtelements (24) aufweist.

4. Kreiselpumpe nach Anspruch 3 4,- **dadurch gekennzeichnet, dass** die Aussparung (15) eine Schulter (16) zum Stützen des Dichtelements (24) aufweist.

5. Kreiselpumpe nach Anspruch 3 oder 4, **dadurch gekennzeichnet, dass** die Aussparung (15) als eine einseitig offene Nut (25) zur Aufnahme eines Dichtelements (24) ausgebildet ist.

6. Kreiselpumpe nach Anspruch 5, **dadurch gekennzeichnet, dass** eine axiale Fläche (21) der einseitig offenen Nut (25) eine Kohlenstoffschicht aufweist.

7. Kreiselpumpe nach Anspruch 5 oder 6, **dadurch gekennzeichnet, dass** eine radiale Fläche (20) der einseitig offenen Nut (25) eine Kohlenstoffschicht aufweist.

8. Kreiselpumpe nach Ansprüchen 1-7, **dadurch gekennzeichnet, dass** das Dichtelement (24) an einem feststehenden Gegenring (34) der Anordnung zur Wellenabdichtung (11) angeordnet ist.

9. Kreiselpumpe nach einem der Ansprüche 1 bis 8, **dadurch gekennzeichnet, dass** der Druckdeckel (7) aus einem metallischen Werkstoff, vorzugsweise einem Gusswerkstoff oder einem nichtrostenden Stahl-Werkstoff, gefertigt ist.

10. Kreiselpumpe nach einem der Ansprüche 1 bis 9, **dadurch gekennzeichnet, dass** es sich um eine amorphe Kohlenstoffschicht handelt.

11. Kreiselpumpe nach einem der Ansprüche 1 bis 10, **dadurch gekennzeichnet, dass** es sich um eine tetraedrische wasserstofffreie amorphe Kohlenstoffschicht handelt.

12. Kreiselpumpe nach einem der Ansprüche 1 bis 11, **dadurch gekennzeichnet, dass**
die Dicke der Kohlenstoffschicht mehr als 0,5 µm, vorzugsweise mehr als 1,0 µm, insbesondere mehr als 1,5 µm, und/oder weniger als 18 µm, vorzugsweise weniger als 16 µm, insbesondere weniger als 14 µm, beträgt.

13. Kreiselpumpe nach einem der Ansprüche 1 bis 12,
**dadurch gekennzeichnet, dass**
die Oberflächenhärte der mit Kohlenstoff beschichteten Oberfläche des Druckdeckels (7) mehr als 20 GPa, vorzugsweise mehr als 30 GPa, insbesondere mehr als 40 GPa, und/oder weniger als 120 GPa, vorzugsweise weniger als 110 GPa, insbesondere weniger als 100 GPa, beträgt.

## Claims

1. Centrifugal pump having a pump casing (10) and a pressure cover (7), wherein a surface of the pressure cover (7) at least partially has a carbon layer and a sealing element (24) is arranged on the pressure cover (7), wherein the pressure cover (7) has at least one surface of contact with the sealing element (24), which is provided with a carbon layer, wherein the sealing element (24) interacts with a shaft sealing arrangement (11) .

2. Centrifugal pump according to Claim 1, **characterized in that** that face (14) of the pressure cover (7) that is in contact with a pumped medium has a carbon layer.

3. Centrifugal pump according to Claim 1 or 2, **characterized in that** the pressure cover (7) has a cutout (15) for receiving the sealing element (24).

4. Centrifugal pump according to Claim 3, **characterized in that** the cutout (15) has a shoulder (16) for supporting the sealing element (24).

5. Centrifugal pump according to Claim 3 or 4, **characterized in that** the cutout (15) is in the form of a groove (25) which is open on one side and intended for receiving a sealing element (24).

6. Centrifugal pump according to Claim 5, **characterized in that** an axial face (21) of the groove (25) which is open on one side has a carbon layer.

7. Centrifugal pump according to Claim 5 or 6, **characterized in that** a radial face (20) of the groove (25) which is open on one side has a carbon layer.

8. Centrifugal pump according to Claims 1-7, **characterized in that** the sealing element (24) is arranged on a fixed support ring (34) of the shaft sealing arrangement (11).

9. Centrifugal pump according to one of Claims 1 to 8, **characterized in that** the pressure cover (7) is made of a metallic material, preferably a cast material or a stainless steel material.

10. Centrifugal pump according to one of Claims 1 to 9, **characterized in that** an amorphous carbon layer is involved.

11. Centrifugal pump according to one of Claims 1 to 10, **characterized in that** a tetrahedral, hydrogen-free, amorphous carbon layer is involved.

12. Centrifugal pump according to one of Claims 1 to 11, **characterized in that** the thickness of the carbon layer is more than 0.5 um, preferably more than 1.0 um, in particular more than 1.5 um, and/or less than 18 µm, preferably less than 16 µm, in particular less than 14 µm.

13. Centrifugal pump according to one of Claims 1 to 12, **characterized in that** the surface hardness of the carbon-coated surface of the pressure cover (7) is more than 20 GPa, preferably more than 30 GPa, in particular more than 40 GPa, and/or less than 120 GPa, preferably less than 110 GPa, in particular less than 100 GPa.

## Revendications

1. Pompe centrifuge avec un corps de pompe (10) et un couvercle de pression (7), une surface du couvercle de pression (7) présentant au moins partiellement une couche de carbone et un élément d'étanchéité (24) étant agencé sur le couvercle de pression (7), le couvercle de pression (7) présentant au moins une surface de contact avec l'élément d'étanchéité (24), qui est pourvue d'une couche de carbone,
l'élément d'étanchéité (24) coopérant avec un agencement pour l'étanchéité de l'arbre (11).

2. Pompe centrifuge selon la revendication 1, **caractérisée en ce que** la surface (14) du couvercle de pression (7) qui est en contact avec un fluide transporté présente une couche de carbone.

3. Pompe centrifuge selon la revendication 1 ou 2, **caractérisée en ce que** le couvercle de pression (7) présente un évidement (15) pour recevoir l'élément d'étanchéité (24).

4. Pompe centrifuge selon la revendication 3, **caractérisée en ce que** l'évidement (15) présente un épaulement (16) pour soutenir l'élément d'étanchéité (24) .

5. Pompe centrifuge selon la revendication 3 ou 4, **caractérisée en ce que** l'évidement (15) est réalisé sous la forme d'une rainure (25) ouverte d'un côté pour recevoir un élément d'étanchéité (24).

6. Pompe centrifuge selon la revendication 5, **caractérisée en ce qu'**une surface axiale (21) de la rainure(25) ouverte d'un côté présente une couche de carbone.

7. Pompe centrifuge selon la revendication 5 ou 6, **caractérisée en ce qu'**une surface radiale (20) de la rainure (25) ouverte d'un côté présente une couche de carbone.

8. Pompe centrifuge selon les revendications 1 à 7, **caractérisée en ce que** l'élément d'étanchéité (24) est agencé sur une contre-bague fixe (34) de l'agencement pour l'étanchéité de l'arbre (11).

9. Pompe centrifuge selon l'une quelconque des revendications 1 à 8, **caractérisée en ce que** le couvercle de pression (7) est fabriqué en un matériau métallique, de préférence un matériau de fonte ou un matériau en acier inoxydable.

10. Pompe centrifuge selon l'une quelconque des revendications 1 à 9, **caractérisée en ce qu'**il s'agit d'une couche de carbone amorphe.

11. Pompe centrifuge selon l'une quelconque des revendications 1 à 10, **caractérisée en ce qu'**il s'agit d'une couche de carbone amorphe tétraédrique exempte d'hydrogène.

12. Pompe centrifuge selon l'une quelconque des revendications 1 à 11, **caractérisée en ce que** l'épaisseur de la couche de carbone est supérieure à 0,5 µm, de préférence supérieure à 1,0 µm, notamment supérieure à 1,5 µm, et/ou inférieure à 18 µm, de préférence inférieure à 16 µm, notamment inférieure à 14 µm.

13. Pompe centrifuge selon l'une quelconque des revendications 1 à 12, **caractérisée en ce que** la dureté superficielle de la surface revêtue de carbone de l'élément de pression (7) est supérieure à 20 GPa, de préférence supérieure à 30 GPa, notamment supérieure à 40 GPa, et/ou inférieure à 120 GPa, de préférence inférieure à 110 GPa, notamment inférieure à 100 GPa.
